# EUROPEAN PATENT APPLICATION

(11) **EP 2 309 624 A1**
(43) Date of publication of application: **13.04.2011**
(21) Application number: 09012813.3
(22) Date of filing: 09.10.2009
(51) Int. Cl.: H02K 15/02, H02K 41/02, H02K 7/14

(54) **Elevator drive**

(71) Applicant: ThyssenKrupp Aufzugswerke GmbH, 73765 Neuhausen a.d.F. (DE)
(72) Inventor: Scholz, Günter, 72622 Nürtingen (DE); Herkommer, Jürgen, 70597 Stuttgart (DE); Müller, Jochen, 70794 Filderstadt (DE); Vogler, Eberhard, 73765 Neuhausen a. d. F. (DE); Pacholet, Achim, 73734 Esslingen (DE); Böpple, Stefan, 70794 Filderstadt (DE)
(74) Representative: Hössle Patentanwälte Partnerschaft

(57) **Abstract**

The invention provides for an elevator drive having an electric motor. Furthermore, the invention provides for a stator and a rotor being used within an electric motor. The elevator drive has an electric motor comprising a rotor and a stator, in which at least one of the rotor and the stator has a core (10) in the form of a sheet metal stack which is built by spirally winding a sheet metal (12).

## Description

### Background of the invention

The present invention relates to an elevator drive having an electric motor comprising a rotor and a stator. Furthermore, the invention provides for a stator and a rotor for an elevator drive.

Various drives have been used in elevators. For example, hydraulic drives and rope or cable drives are widely used in this technical field.

As miniaturisation of elevator drives is getting more and more important, use of synchronous motors is increasing. However, main issues in developing elevators drives remain reduction of costs and installation space. Furthermore, as costs for raw material and energy prices are increasing, designs allowing for optimised material consumption and high level of efficiency during operation of the elevator are intended. In this context, elevator systems not requiring a machine room have been introduced.

Furthermore, a low noise level, a low vibration level and a low level of torque ripples are desirable in elevators.

### Brief summary of the invention

The present invention was made in view of the above problems and an object thereof is to provide an improved elevator drive.

To achieve the above-mentioned object, the present invention provides for an elevator drive having an electric motor comprising a rotor and a stator, in which at least one of the rotor and the stator has a core in the form of a sheet metal stack which is built by spirally winding a sheet metal.

Therefore, in one embodiment the elevator drive has an electric motor comprising a rotor and a stator, in which the rotor has a core in the form of a sheet metal stack which is built by spirally winding or rotating a sheet metal. In another embodiment the elevator drive has an electric motor comprising a rotor and a stator, in which the stator has a core in form of a sheet metal stack which is built by spirally winding or rotating a sheet metal. In yet another embodiment both the rotor and the stator have a core in the form of a sheet metal stack built by spirally winding or rotating a sheet metal.

Usually, the core is welded to achieve an inherently stable sheet metal stack.

In another embodiment, the sheet metal is wound into a cylindrical stack.

The electric motor can be a synchronous motor or a asynchronous motor.

In a further embodiment, each coil of the stator winding is in the form of a single-tooth winding. A single-tooth winding in combination with a stator core in the form of a sheet metal stack built by spirally winding a sheet metal is particularly advantageous with regard to material consumption. A stator winding in the form of a singel-tooth winding allows for distinct segmentation of the stator.

Alternatively, the stator winding is in the form of a distributed winding.

The electric motor can be designed as an external rotor motor or an internal rotor motor.

The specific form of the core is especially adapted for diameters of more than 250 mm as the material consumption in production of the core can be significantly reduced.

One converter can be provided for driving the motor.

In one embodiment, the electric motor is subdivided into a number of segments, with each segment having an associated converter.

Especially, the stator can be subdivided into segments in the circumferential direction. Furthermore, the rotor can be subdivided into a number of segments in the circumferential direction.

Segmentation is possible in the case of a suitable choice of the ratio of magnet poles to stator slots in conjunction with a preferably concentrated winding which is also referred to as a single-tooth winding.

One segment typically comprises an independent m-phase system which is operated by one converter. This means that the total rating required by the elevator can be divided by the number of segments. Each individual converter need to provide only this rating, reduced by the ratio of the total rating to the number of segments. This allows the drive, as well as all the components which are required in conjunction with the stator and the rotor, to be produced at a lower cost.

Furthermore, smaller converters can be operated more easily at higher switching frequencies, so that the drive is quieter. The larger the converters, the greater the extent to which higher switching frequencies cause problems. Lower frequencies lead to louder motors. A further advantage of the segmented design of the motor of the elevator drive which is arranged adjacent to or in the elevator shaft in buildings and in the vicinity of rooms in which people live, is therefore the reduced noise developed.

In a further embodiment, the elevator is in the form of a direct drive, i.e. a gearless drive.

Furthermore, a stator and a rotor for an elevator drive as defined above are provided.

The elevator drive as proposed above has, at least in its embodiments, a number of adavantages. As consumption of raw material can be substantially reduced, an environmentally conscious production can be performed. Moreover, a quieter running of the elevator drive can be obtained.

### Brief description of several views of the drawings

The foregoing summary, as well as the following detailed description of preferred embodiments of the invention, will be better understood when read in conjunction with the appended drawings. For the purpose of illustrating the invention, that shown in the drawings embodiments which are presently preferred. It should be understood however, that the invention is not limited to precise arrangements and instrumentalities shown.

It is self-evident that the features mentioned above and those which are still to be explained in the following text can be used not only in the respectively stated combination but also in other combinations or on their own without departing from the scope of the present invention.

In the drawings:
- Figur 1: shows a first embodiment of a stator core accord- ing to the invention, illustrated in a simplified form.
- Figure 2: shows a punched sheet metal strip in a simplified form in order to show production of the stator core.
- Figure 3: shows production of two stator cores.
- Figure 4: shows an elevator system using an elevator drive.
- Figure 5: shows an elevator drive in perspective view.
- Figure 6: shows the elevator drive in Figure 5 in cross- sectional view.

### Detailed description of the invention

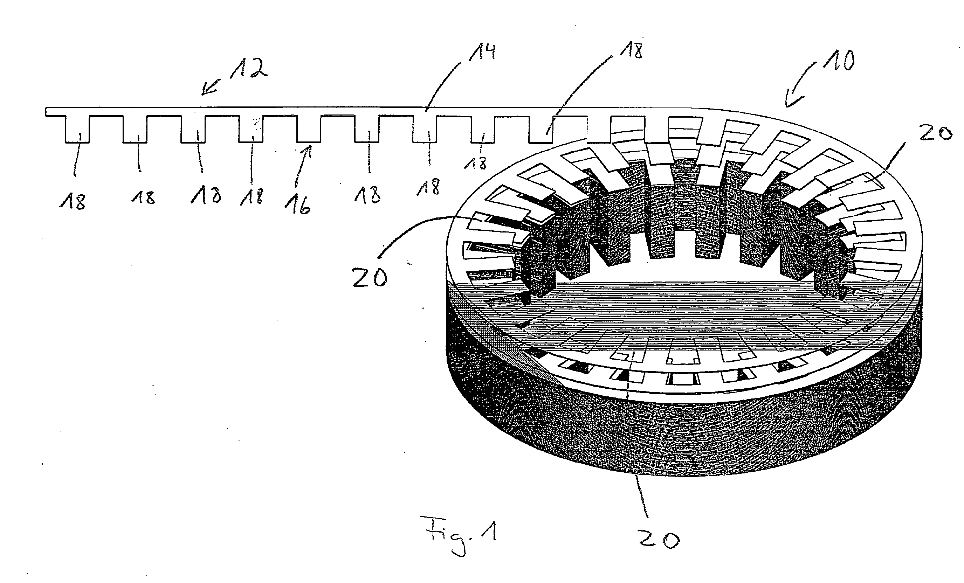

Figure 1 shows in simplified view a core of a stator which is annoted overall with the reference number 10. This helical core 10 is made by spirally rotating or spirally winding and stacking up a sustained sheet metal 12.

The sheet metal 12 includes a base portion 14 and a teeth portion 16 having a number of teeth 18 extending basically at right angles from the base portion 14. The teeth 18 of the sheet metal lie on top of each other when stacked forming teeth and in between nuts or slots 20 of the stator core 10. For stability reasons the core 10 can be welded.

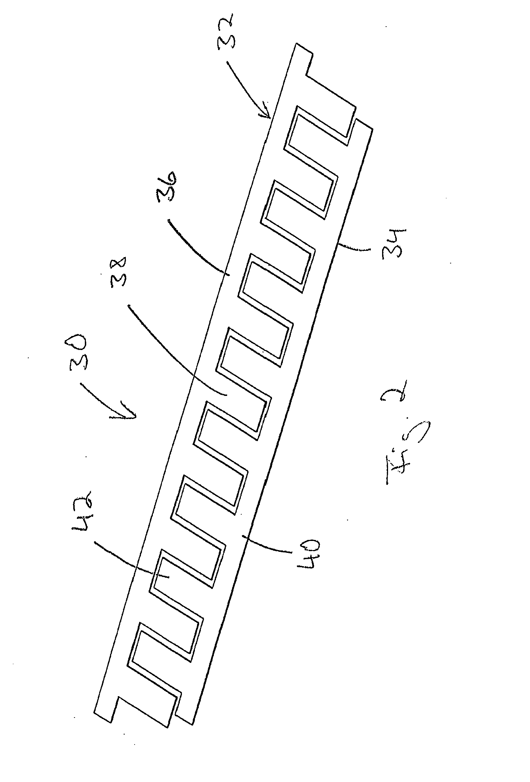

Figure 2 shows a sheet metal strip 30 for production of stator cores according to the invention. The sheet metal strip 30 is punched so that two sheet metals 32, 34 are formed. The first sheet metal 32 includes a base portion 36 and a teeth portion 38. Accordingly, the second sheet metal 34 includes a base portion and a teeth portion 42.

Teeth of the teeth portion 38 of the first sheet metal 32 and teeth of the teeth portion 42 of the second sheet metal 34 mesh in the form of a meander. The special configuration of the teeth portions 38 and 42 is adapted for a single-tooth winding and allows for an production process with reduced material consumption.

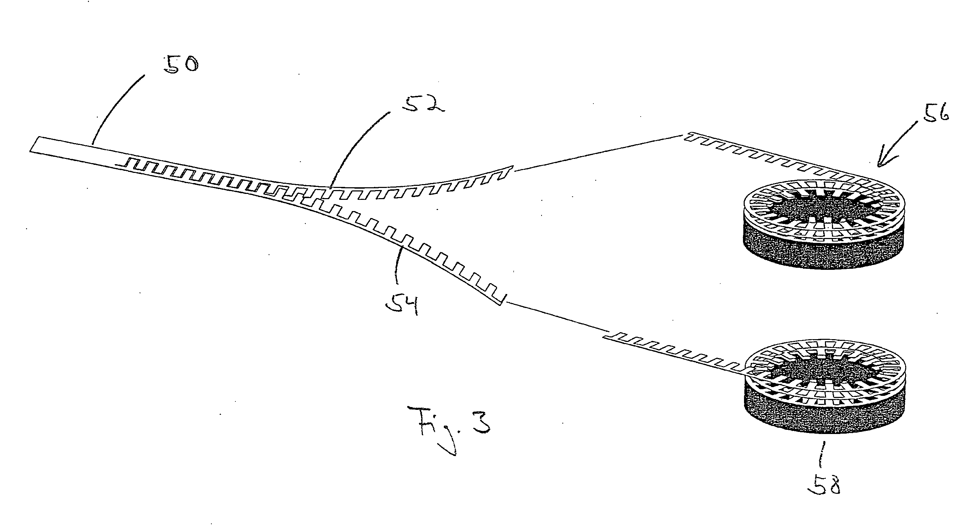

Figur 3 shows another sheet metal strip 50 which is punched to form two sheet metals 52 and 54 each of which are used for winding and stacking to form stator cores 56 and 58.

Therefore, two stator cores 56 and 58 can be produced using one sheet metal strip 50 whereby material consumption is optimised.

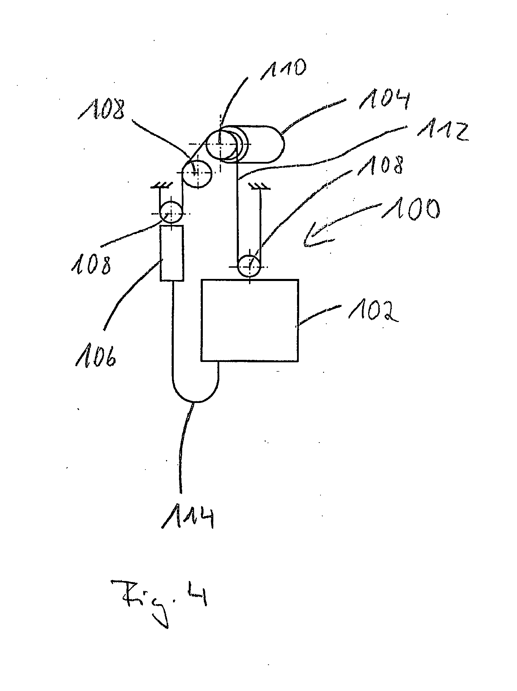

Figure 4 shows an example of an elevator system 100 in a schematic view. The elevator system 100 comprises a car 102, an elevator drive 104, a counterweight 106, three diverter pulleys 108 and a traction sheave 110. Moreover, compensation ropes 114 are provided connecting the car 102 and the counterweight 106.

The elevator drive 104 moves the elevator system 100 by means of ropes 112 which in turn is driven by the traction sheave 110.

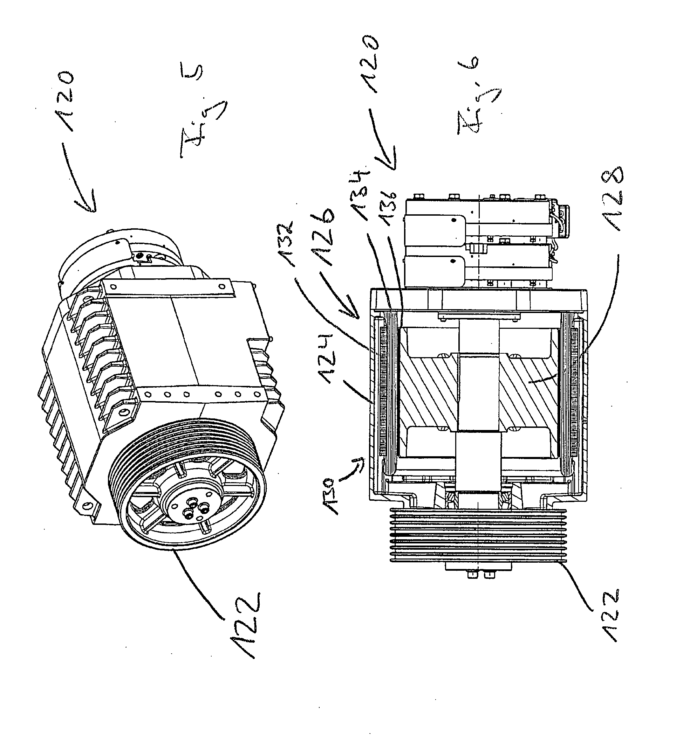

Figure 5 shows an example of an embodiment of the elevator drive 120 in a perspective view which is adapted for use in an elevator system as shown in Figure 4 and denoted with reference number 104. The elevator drive 120 comprises an electric synchronous motor (not shown) which drives a traction sheave 122 (as traction sheave 104 in Figure 4) for moving the car of the elevator system.

Figure 6 shows the elevator drive 120 in a cross sectional view. The elvator drive 122 includes within a housing 124, a synchronous motor 126 comprising a rotor 128 and a stator 130 having a core built by a sheet metal stack 132 carrying a stator winding 134.

Furthermore, permanent magnets 136 are applied on the rotor 128.

## Claims

1. An elevator drive having an electric motor comprising a rotor (128) and a stator (130), in which at least one of the rotor (128) and the stator (130) has a core (10, 56, 58) in the form of a sheet metal stack (132) which is built by spirally winding a sheet metal (12, 32, 34, 52, 54).

2. The elevator drive as claimed in claim 1, in which the sheet metal (12, 32, 34, 52, 54) is wound into a cylindrical stack.

3. The elevator drive as claimed in claim 1 or 2, in which the electric motor is a synchronous motor (126).

4. The elevator drive as claimed in claim 1 or 2, in which the electric motor is a asynchronous motor.

5. The elevator drive as claimed in any of of claims 1 to 4, in which each coil of the stator winding (134) is in the form of a single-tooth winding.

6. The elevator drive as claimed in any of of claims 1 to 4, in which each coil of the stator winding (134) is in the form of a distributed winding.

7. The elevator drive as claimed in any of claims 1 to 6, in which the electric motor is an external rotor motor.

8. The elevator drive as claimed in any of claims 1 to 7, in which the electric motor is an internal rotor motor.

9. The elevator drive as claimed in any of claims 1 to 8, in which the diameter of the wound metal sheet (12, 32, 34, 52, 54) is more than 250 mm.

10. The elevator drive as claimed in any of claims 1 to 9, in which one converter is provided.

11. The elevator drive as claimed in any of claims 1 to 9, in which the electric motor is subdivided into a number of segments, with each segment having an associated converter.

12. The elevator drive as claimed in claim 11, in which the stator (130) is subdivided into segments in the circumferential direction.

13. The elevator drive as claimed in claim 11, in which the rotor (128) is subdivided into segments in the circumferential direction.

14. The elevator drive as claimed in any of claims 1 to 13, which is in the form of a direct drive.

15. Stator for an elevator drive (104, 120) as claimed in one of claims 1 to 14.

16. Rotor for an elevator drive (104, 120) as claimed in one of claims 1 to 14.
